# EUROPEAN PATENT APPLICATION

(11) **EP 4 848 510 A1**
(43) Date of publication of application: **02.12.2026**
(21) Application number: 26176862.6
(22) Date of filing: 06.05.2026
(51) Int. Cl.: H02H 9/00, H02H 3/06, H02H 3/087

(54) **LOAD INRUSH MANAGEMENT FOR DC PROTECTION DEVICES**

(30) Priority: 30.05.2025 US 202519223938
(71) Applicant: Schneider Electric USA, Inc., Boston, MA 02108 (US)
(72) Inventor: COOK, Eric Franklin, Boston, 02108 (US); JEFFERIES, Kevin Michael, Boston, 02108 (US); FOSTER, Marc David, Boston, 02108 (US); ARAZO, Anthony Reac Martinez, Boston, 02108 (US); EDWARDS, Benjamin Wilson, Boston, 02108 (US)
(74) Representative: Openshaw & Co.

(57) **Abstract**

A load inrush processor (108) measures an initial voltage of the system, and starts timers for monitoring the process after closing the circuit. If the load inrush processor (108) fails to detect a short circuit trip during an inrush management step, the load inrush processor (108) determines the distribution system is operating normally and terminates management. If the load inrush processor (108) detects a trip during the management step, the load inrush processor (108) re-closes the circuit after a delay to divide up the current flowing into the system. After reclosing the circuit, the load inrush processor (108) evaluates the initial voltage If the voltage indicates the load (106) is charged, inrush management was successful. If the voltage indicates the load (106) is charging, the load inrush processor (108) performs another inrush management step. Otherwise, if the load (106) is not charging, inrush management terminates asserting a short circuit trip.

## Description

### BACKGROUND

Load inrush is an instantaneous increase in current during the closing of a circuit. Load inrush can cause damage to electrical components if the current exceeds the tolerance of the device. Excessive load inrush also presents issues during charging of high capacitance loads. While charging high capacitance loads, the circuit's electrical signature may present as a shorted load during load inrush. Responsive to a shorted load, over-protection devices may open the circuit to prevent harm, but opening the circuit also prevents charging of the capacitive load. A traditional breaker protects the circuit from damage as a result from shorting but the traditional breaker cannot identify changes at the speed required to address issues caused by load inrush. Presently, most direct current (DC) systems solve issues with load inrush by pre-charging capacitive devices before closing the distribution system.

### SUMMARY

Aspects of the present disclosure, provide a system for managing load inrush for DC protection devices. The DC protection device operates to protect a DC distribution system from overcurrent. After receiving a request to close the circuit, the load inrush processor coupled to the DC protection devices starts an inrush step timer, an inrush total timer, and sets a short circuit threshold. The load inrush processor continuously monitors the total time for managing load inrush and terminates and asserts a short circuit in response to exceeding a predetermined threshold. The load inrush processor performs inrush management by monitoring for a short circuit after closing the circuit. If the inrush step timer exceeds a threshold without the load inrush processor detecting a short circuit, the load inrush processer terminates inrush management and sets the short circuit threshold to a nominal value. Otherwise, if the load inrush processor detects a short circuit, the load inrush processor repeatedly closes the circuit after a delay until the inrush step timer reaches the predetermined threshold. After exceeding the inrush step duration, the inrush duration evaluates the voltage of the system to determine whether the loads have successfully charged and, if the voltages have successfully charged, inrush management terminates. If the loads have not charged, the load inrush processor determines whether the loads are not charging, resulting in termination of load inrush and asserting a short circuit. In the alternative, if the loads are charging but not at capacity, iterating through another inrush management step and re-closing the circuit results.

In an aspect, a load inrush protection system for managing load inrush for direct current (DC) protection in a power distribution system configured to supply DC power to a load includes a DC protection device coupled to the power distribution system, the DC protection device comprising a power transistor. The power transistor is configured to selectively close a circuit for connecting the DC power to the load. The load inrush protection system also includes a load inrush processor coupled to the DC protection device and a memory coupled to the load inrush processor. When executed by the processor, computer-executable instructions stored in the memory configure load inrush processor for causing the power transistor of the DC protection device to close the circuit for connecting the DC power to the load and detecting when the DC protection device trips in response to a short circuit. The power transistor opens when the DC protection device trips to open the circuit for interrupting the DC power to the load. The executable instructions further configure the load inrush processor for setting an inrush step timer when the DC protection device trips and in response to the inrush step timer not exceeding an inrush step duration limit as well as causing the power transistor to reclose after a reclose delay time and repeating the detecting, setting, and reclosing steps one or more times until the inrush step timer reaches the inrush step duration limit. The executable instructions also configure the load inrush processor for monitoring load voltage in response to the inrush step duration reaching the inrush step duration limit and comparing a change in the monitored load voltage over time to a predetermined inrush voltage check level. The executable instructions additionally configure the load inrush processor for identifying a charged load when the change in the monitored load voltage over time exceeds the inrush voltage check level and differentiating between a charging load from a non-charging load when the change in the monitored load voltage over time indicates an increase in voltage.

In another aspect, a method for protecting a DC distribution system supplying DC power to a load from excessive load inrush includes storing an initial voltage measurement of the load and closing a solid state switch of a DC protection device to close a circuit for connecting the DC power to the load. The method also includes detecting when the DC protection device trips in response to a short circuit. The solid state switch opens when the DC protection device trips to open the circuit for interrupting the DC power to the load. The method further comprises reclosing the solid state switch and repeating the detecting and reclosing steps one or more times until an inrush step timer reaches an inrush step duration limit. The method further includes determining, after the inrush step timer reaches the inrush step duration limit, a load charging status based on comparing the initial voltage measurement to an updated measurement of the voltage of the load and based on the determined load charging status, differentiating between charging of the load and non-charging of the load, wherein inrush current is limited during charging of the load.

In yet another aspect, a load inrush protection system, for managing load inrush for DC protection in a power distribution system supplying DC power to a load includes a DC protection device coupled to a DC power distribution system and an electronic device of the DC power distribution system. The system further includes a load inrush processor coupled to the DC protection device and a memory coupled to the load inrush processor. When executed by the processor, computer-executable instructions stored in the memory configure load inrush processor for receiving a device current rating associated with the electronic device, setting a short circuit threshold to the device current rating, and receiving a signal to close a circuit associated with the electronic device. The executable instructions further configure the load inrush processor for starting an inrush step timer, causing a switch of the DC protection device to close the circuit for connecting the DC power to the load, and detecting a current of the circuit. The executable instructions also configure the load inrush processor for tripping, in response to a current of the circuit exceeding the short circuit threshold, the DC protection device, wherein the switch for interrupting the DC power to the load and reclosing the switch after a reclose delay time and repeating the detecting, tripping, and reclosing steps one or more times until the inrush step timer reaches the inrush step duration limit. The executable instructions additionally configure the load inrush processor for monitoring load voltage in response to the inrush step duration reaching the inrush step duration limit and comparing a change in the monitored load voltage over time to a predetermined inrush voltage check level. The executable instructions yet further configure the load inrush processor for identifying a charged load when the change in the monitored load voltage over time exceeds the inrush voltage check level; and differentiating, in response to failing to identify a charged load, between a charging load from a non-charging load when the change in the monitored load voltage over time indicates an increase in voltage.

Other objects and features of the present invention will be in part apparent and in part pointed out herein.

### BRIEF DESCRIPTION OF THE DRAWINGS

FIG. 1 is a block diagram illustrating a load inrush management system, according to an embodiment.
FIG. 2 is a flow diagram illustrating a process for managing load inrush, according to an embodiment.
FIG. 3 is a flow diagram illustrating a process for monitoring the execution time of inrush management, according to an embodiment.

Corresponding reference characters indicate corresponding parts throughout the drawings.

### DETAILED DESCRIPTION

The features and other details of the concepts, systems, and techniques sought to be protected herein will now be more particularly described. It will be understood that any specific embodiments described herein are shown by way of illustration and not as limitations of the disclosure and the concepts described herein. Features of the subject matter described herein can be employed in various embodiments without departing from the scope of the concepts sought to be protected.

Load inrush can cause harm to components of electrical devices in a DC system. While pre-charging of capacitive devices can prevent some issues from load inrush, they require additional charging equipment increasing the cost and complexity of the system. Utilizing a traditional electromagnetic circuit breaker fails to respond to the changes in the system at a speed quick enough to enable closing on and opening off a circuit fast enough to modulate the load inrush. To solve the load inrush problem, traditional systems utilize pre-charging devices. Pre-charging devices not only increase cost, but also may be difficult to manage for solutions with isolation switches between two sections of the system. Additionally, pre-charging devices only may be suitable for charging one or a finite set of capacitive loads rather than managing an entire set of loads within a distribution system.

Management of load inrush using a DC protection device according to aspects of the present disclosure enables a capacitive load to charge without additional equipment for pre-charging. DC systems utilize devices, such as a circuit router, to protect the system from shorts. Because these devices use solid state protection or hybrid protection, the device can more quickly respond to quickly changing electrical current within the system. The inventors recognized that in ordinary DC systems, high capacitive loads can present the same electrical signal as a shorted load during load inrush. For example, distribution systems often include high capacitance and load devices such as power converters. As a result, without pre-charging, a protection device may trip after closing onto a high capacitive load. By using a solid state or hybrid protection device, a protection system can rapidly respond to changes in voltage and current of the system. Thus, the system can repeatedly close onto a capacitive load to distinguish between an electrical signature indicating an actual shorted circuit and a charging capacitive load. Further, by managing load inrush utilizing a DC protection device, the system can manage many downstream devices within a distribution system.

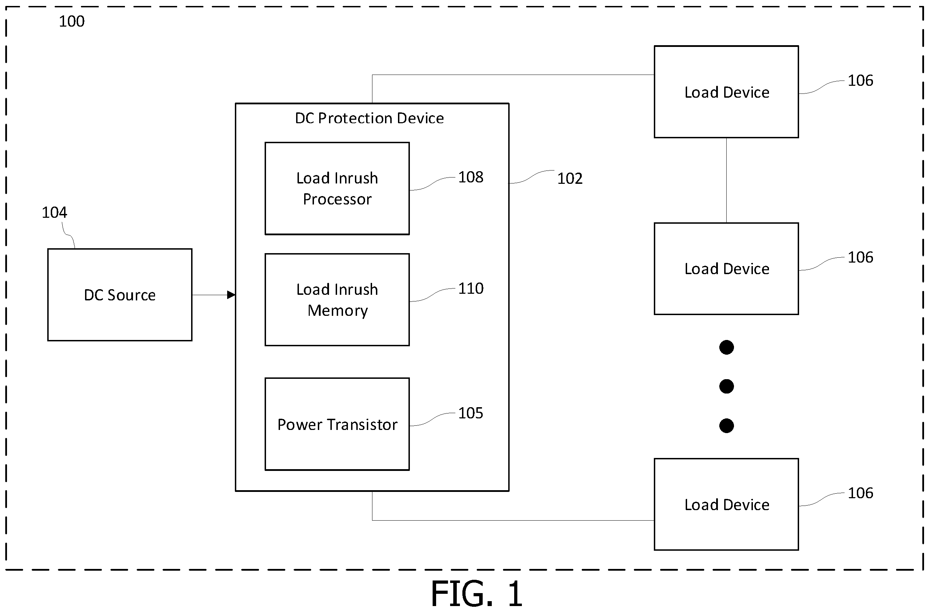

FIG. 1 is a block diagram illustrating an inrush management system, according to an embodiment. The inrush management system includes a DC protection device 102 for protecting the DC distribution system 100 and loads of the system from overcurrent. In some embodiments, the DC protection device 102 comprises a bidirectional current router. A bidirectional current router can replace conventional mechanical breakers in a DC distribution system 100. The bidirectional current router provides solid state protection that ensures fast fault clear and selectivity. In other embodiments, the DC protection device 102 includes any form of solid state or hybrid protection for DC circuits. Solid state and hybrid protection devices enable quick responsivity to changes in electrical current. For example, a solid state protection device may shutdown in response to overcurrent in less than one microsecond. Thus, these devices can detect rapidly changing current during load inrush and respond appropriately.

The DC protection device 102 receives current from a DC power source 104 and relays the current to load devices 106 of the DC distribution system 100. The DC protection device 102 includes a power transistor 105 for closing the circuit of the distribution system 100 and opening in response to detecting a short circuit. In one or more embodiments, the power transistor 105 comprises a solid state switch, such as a field effect transistor (FET), a bipolar junction transistor (BJT), an insulated gate bipolar transistor (IGBT), or a similar fast-switching semiconductor switch to close the circuit. The FET, BJT, or IGBT can be either NPN-type or PNP-type devices. Thus by receiving current via the power transistor 105, the DC protection device 102 controls the flow of current into the load devices 106. As described herein, the terms "power transistor" and "switch" may be referred to interchangeably.

In one or more embodiments, the DC protection device 102 includes a load inrush processor 108 for monitoring current and voltage of the system to protect downstream devices from load inrush. The load inrush processor 108 couples with one or more sensors for monitoring the distribution system 100. In some embodiments, the sensors may include one or more voltmeters for measuring voltage of one or more loads of the distribution system 100 or one or more ammeters or multimeters for measuring current within the distribution system 100. Alternatively, or additionally, sensors may include other devices for measuring status of the distribution system 100 or loads of the system. For example, sensors may further include temperature sensors for monitoring temperature within the distribution system 100. A load inrush memory 110 couples with the load inrush processor 108. The load inrush memory 110 stores processor-executable instructions for performing aspects of managing load inrush, further described below. Further, the load inrush memory 110 further stores measurements of voltages and current of one or more loads the DC distribution system 100.

The DC distribution system 100 includes one or more load devices 106. The load devices 106 include one or more capacitive load devices storing energy and that need to be charged for operation. For example, capacitive load devices may include electric motors, heaters, transformers, and generators. Due to the high capacitive nature of some of these loads, load inrush occurs when closing the circuit to supply power from the DC source 104. A circuit using a traditional mechanical circuit breaker, for example, may detect the load inrush as a short circuit due to detecting a high current. Changes to the current during load inrush occur rapidly with current normalizing within milliseconds for lighter loads or up to a minute for high capacitive loads. If the traditional circuit breaker trips, the capacitive load is not afforded an opportunity to charge. Using load inrush management, however, the DC protection device 102 can divide up the current flow into smaller chunks by opening the power transistor 105 (e.g., the FET) in response to high current levels. This provides a delay during which the voltage is allowed to stabilize. Repeatedly closing the switch again allows pulses of current to flow to the load. As a result, the capacitive loads of the distribution system 100 charge up to their capacity without causing a short circuit, damaging the devices of the load, or requiring a pre-charging device.

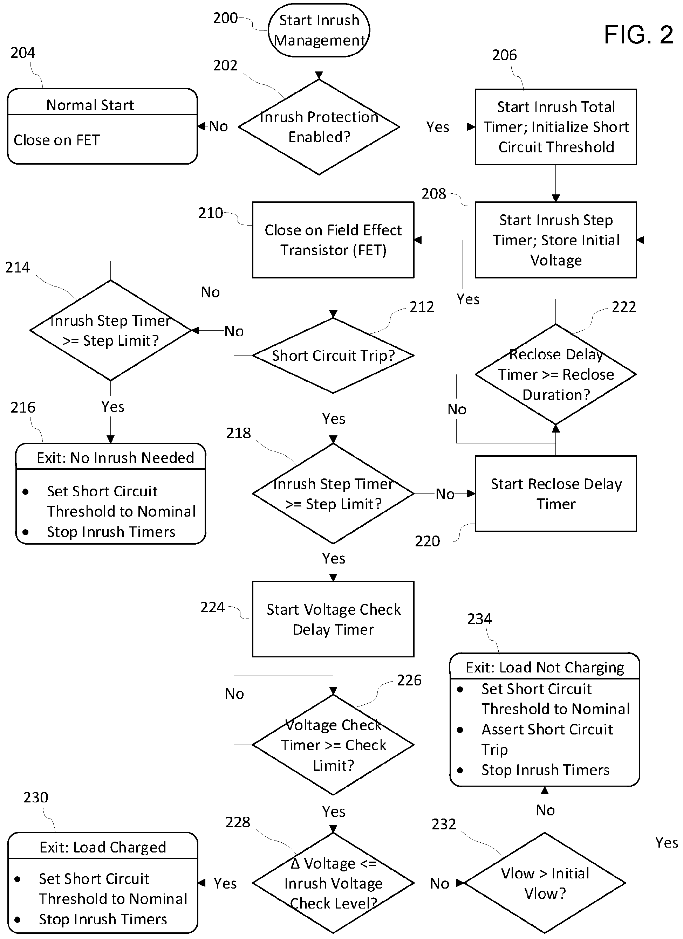

FIG. 2 is a flow diagram illustrating an example load inrush management process 200 for a DC protection device 102, according to an embodiment. The process 200 begins with the load inrush processor 108 receiving a close signal to close a circuit of the DC protection device 102. At step 202, the inrush processor 108 determines whether inrush protection is enabled. If inrush protection is not enabled, the circuit is closed at step 204 and the inrush management process 200 ends. If inrush management is enabled, the process 200 proceeds to step 206. With a configurable setting for load inrush management, the DC protection device 102 may operate as a conventional DC protection device 102 when needed, or perform load inrush management for overcurrent protection specifically during load inrush.

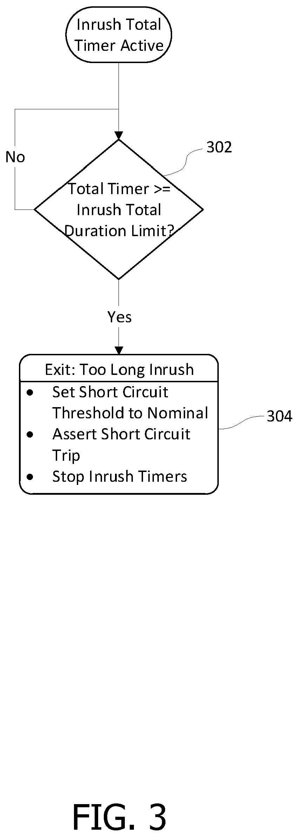

At step 206 of the inrush management process 200, the inrush processor 108 starts an inrush total timer for monitoring the total execution time of inrush management, see FIG. 3. The inrush processor 108 also initializes a short circuit threshold. In some embodiments, the short circuit threshold is predetermined by a user of the DC protection device 102. In other embodiments, the short circuit threshold is determined based on a current limit for the devices of the circuit. For example, a user preferably selects a short circuit threshold below the operating limit of the devices of the distribution system 100 to ensure current stays below the threshold. Alternatively, a user may determine to set the short circuit threshold to the lowest current limit for the devices of the system. In one or more embodiments, during performance of inrush management process 200 or otherwise during power distribution of the distribution system 100, the short circuit threshold may be updated. In some embodiments, by continuously monitoring current within the distribution system 100, the load inrush processor 108 detects whether to lower the short circuit threshold based on the performance of the system or response of the load to inrush.

The load inrush management process 200 continues with starting an inrush step timer and storing initial voltage of the circuit at step 208. The inrush step timer allows the inrush process to determine whether to proceed to the next iteration of inrush management for pulsing the load with current. Because load inrush may vary frequently within a short time period, the inrush management process 200 needs to be able to iterate through several openings and closings of the circuit to manage the flow of current. Each iteration of the inrush management step starts with closing the switch at step 208 and ends with determining a load charge status at steps 228 and 232 or determining inrush management is no longer needed at step 216. Because the DC protection device 102 is able to rapidly respond to changes in current and frequent variance of current during load inrush, the inrush management step may be limited from one to one hundred milliseconds. As mentioned, step 208 further includes storing an initial low voltage measurement. Measuring the initial voltage enables the process 200 to identify changes in the voltage to determine whether the load is charging, charged, or not charging. After or simultaneous to starting the inrush step timer and storing the initial voltage, the process 200 continues with closing the switch or power transistor 105 of the DC protection device 102 at step 210.

The inrush processor 108 monitors the circuit to detect if the DC protection device 102 trips as a result of a short circuit at step 212. In some embodiments, the DC protection 102 device trips as a result of the current exceeding the short circuit threshold. By tripping or opening the switch/power transistor 105 when exceeding a threshold, the inrush processor 108 divides up the current to protect devices of the system from overcurrent while only asserting a short circuit on the DC protection device 102 when detected through the inrush management process steps below. While the inrush processor 108 has not detected a short circuit, the inrush processor 108 also continues to check the inrush step timer at step 214. If the inrush step timer has not exceeded the inrush step timer, the inrush processor 108 continues to monitor for a short circuit at step 212. Otherwise, if the inrush step timer has exceeded the inrush step limit without detecting a short circuit trip, then the inrush management process proceeds to step 216. At step 216, the inrush sets the short circuit threshold to a nominal value and stops all inrush timers before terminating the inrush management process 200. Because the inrush step timer exceeded the step limit without a short circuit trip, the inrush processor 108 determines that the circuit is operating without issue and therefore inrush management is no longer required.

If the inrush processor 108 detects a short circuit during monitoring, the inrush processor 108 evaluates the inrush step timer at step 218 of the inrush management process 200. If the inrush step timer has not exceeded the inrush step limit, then the inrush processor 108 starts a reclose timer at step 220. The reclose timer ensures that the switch or power transistor 105 wait sufficient time before re-closing after the short circuit trip, thus the current pulses during closing and re-closing. Because the power transistor 105 of the DC protection device 102 allows for rapid reclosing, the reclose timer may range from one microsecond to one hundred microseconds. The inrush processor 108 waits for the duration of the reclose delay timer at step 222. After the reclose delay, the inrush processor 108 closes the power transistor 105 or switch of the DC protection device 102 again at step 210 and proceeds with monitoring.

Returning to step 218 of the inrush management process 200, if the inrush step timer exceeds the step duration, then the process 200 continues to start voltage check delay timer at step 224. The inrush processor 108 monitors the voltage check timer at step 226 and waits until the timer exceeds a voltage check delay duration. Waiting for a specified duration ensures that the voltage of the system has stabilized. After waiting the for the voltage check limit time, the inrush processor 108 monitors load voltage of the circuit at step 228. The inrush processor 108 differentiates between whether the voltage of the circuit has increased above an inrush voltage check level indicating that the load has successfully charged or alternatively, has reached a sufficient level of charge that inrush protection is no longer required. For example, the inrush processor 108 will determine whether the load voltage is similar to the line side voltage, from the DC source 104, indicating that the load has successfully charged. If the change in voltage matches or exceeds the inrush voltage check level, the inrush processor 108 determines that the load is successfully charged. Therefore, the inrush processor 108 stops the timers and sets the short circuit threshold to a nominal value before terminating the inrush management process 200 at step 230.

If the change in voltage does not exceed the voltage check level, the inrush management process 200 continues with comparing the voltage measurement to the initial voltage at step 232. The inrush processor 108 evaluates the voltage compared to the initial voltage to determine whether the load is charging. If the inrush processor 108 determines that the voltage has increased from the initial voltage, the inrush management process 200 returns to step 208 to re-starting another inrush step to continue allowing more current into the circuit. Thus, after identifying that the voltage across the system is increasing the switch of the DC protection device 102 will close again to allow charging to continue. Otherwise, if the voltage measurement has not changed from the initial measurement the voltage status indicates the load is unsuccessfully charging and the process 200 proceeds to step 234. At step 234, the load inrush processor 108 sets the short circuit threshold to a nominal value, stops the timers, and asserts a short circuit trip because the load is not charging and execution of inrush management 200 ends.

FIG. 3 is a flow diagram illustrating the process for monitoring the total inrush management process of FIG. 2, according to an embodiment. The inrush processor 108 monitors the total inrush time during the inrush management process 200 at step 302. If during inrush management, the total inrush duration timer exceeds an inrush total duration limit, the inrush processor 108 sets the short circuit threshold to nominal, stops all timers, and asserts a short circuit trip at step 304. Because inrush may normalize within a quick time span, the inrush total duration limit should not exceed the total expected time for normalization of the load inrush. For example, in high capacitive loads the inrush total duration limit may range from a couple seconds up to a minute in extreme cases, however, in lower capacitive loads the duration may be as few as several milliseconds. By monitoring the total time for executing the inrush management process 200, the inrush processor 108 identifies scenarios where the capacitive load is not increasing at an expected rate, potentially indicating a short circuit.

Embodiments of the present disclosure may comprise a special purpose computer including a variety of computer hardware, as described in greater detail herein.

For purposes of illustration, programs and other executable program components may be shown as discrete blocks. It is recognized, however, that such programs and components reside at various times in different storage components of a computing device, and are executed by a data processor(s) of the device.

Although described in connection with an example computing system environment, embodiments of the aspects of the invention are operational with other special purpose computing system environments or configurations. The computing system environment is not intended to suggest any limitation as to the scope of use or functionality of any aspect of the invention. Moreover, the computing system environment should not be interpreted as having any dependency or requirement relating to any one or combination of components illustrated in the example operating environment. Examples of computing systems, environments, and/or configurations that may be suitable for use with aspects of the invention include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments of the aspects of the present disclosure may be described in the general context of data and/or processor-executable instructions, such as program modules, stored one or more tangible, non-transitory storage media and executed by one or more processors or other devices. Generally, program modules include, but are not limited to, routines, programs, objects, components, and data structures that perform particular tasks or implement particular abstract data types. Aspects of the present disclosure may also be practiced in distributed computing environments where tasks are performed by remote processing devices that are linked through a communications network. In a distributed computing environment, program modules may be located in both local and remote storage media including memory storage devices.

In operation, processors, computers and/or servers may execute the processor-executable instructions (e.g., software, firmware, and/or hardware) such as those illustrated herein to implement aspects of the invention.

Embodiments may be implemented with processor-executable instructions. The processor-executable instructions may be organized into one or more processor-executable components or modules on a tangible processor readable storage medium. Also, embodiments may be implemented with any number and organization of such components or modules. For example, aspects of the present disclosure are not limited to the specific processor-executable instructions or the specific components or modules illustrated in the figures and described herein. Other embodiments may include different processor-executable instructions or components having more or less functionality than illustrated and described herein.

The order of execution or performance of the operations in accordance with aspects of the present disclosure illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the invention.

When introducing elements of the invention or embodiments thereof, the articles "a", "an", "the" and "said" are intended to mean that there are one or more of the elements. The terms "comprising", "including" and "having" are intended to be inclusive and mean that there may be additional elements other than the listed elements.

Not all of the depicted components illustrated or described may be required. In addition, some implementations and embodiments may include additional components. Variations in the arrangement and type of the components may be made without departing from the scope of the claims as set forth herein. Additional, different or fewer components may be provided and components may be combined. Alternatively, or in addition, a component may be implemented by several components.

The above description illustrates embodiments by way of example and not by way of limitation. This description enables one skilled in the art to make and use aspects of the invention, and describes several embodiments, adaptations, variations, alternatives and uses of the aspects of the invention, including what is presently believed to be the best mode of carrying out the aspects of the invention. Additionally, it is to be understood that the aspects of the invention are not limited in its application to the details of construction and the arrangement of components set forth in the following description or illustrated in the drawings. The aspects of the invention are capable of other embodiments and of being practiced or carried out in various ways. Also, it will be understood that the phraseology and terminology used herein is for the purpose of description and should not be regarded as limiting.

It will be apparent that modifications and variations are possible without departing from the scope of the invention defined in the appended claims. As various changes could be made in the above constructions and methods without departing from the scope of the invention, it is intended that all matter contained in the above description and shown in the accompanying drawings shall be interpreted as illustrative and not in a limiting sense.

In view of the above, it will be seen that several advantages of the aspects of the invention are achieved and other advantageous results attained.

The Abstract and Summary are provided to help the reader quickly ascertain the nature of the technical disclosure. They are submitted with the understanding that they will not be used to interpret or limit the scope or meaning of the claims. The Summary is provided to introduce a selection of concepts in simplified form that are further described in the Detailed Description. The Summary is not intended to identify key features or essential features of the claimed subject matter, nor is it intended to be used as an aid in determining the claimed subject matter.

Further aspects of the invention are provided by the subject matter of the following clauses:
Clause 1. A load inrush protection system for managing load inrush for direct current (DC) protection in a power distribution system, the power distribution system configured to supply DC power to a load, the load inrush protection system comprising: a DC protection device coupled to the power distribution system, the DC protection device comprising a power transistor, the power transistor configured to selectively close a circuit for connecting the DC power to the load; a load inrush processor coupled to the DC protection device; and a memory coupled to the load inrush processor, the memory storing processor-executable instructions that, when executed, configure the load inrush processor for: causing the power transistor of the DC protection device to close the circuit for connecting the DC power to the load; detecting when the DC protection device trips in response to a short circuit, wherein the power transistor opens when the DC protection device trips to open the circuit for interrupting the DC power to the load; setting an inrush step timer when the DC protection device trips and in response to the inrush step timer not exceeding an inrush step duration limit; causing the power transistor to reclose after a reclose delay time and repeating the detecting, setting, and reclosing steps one or more times until the inrush step timer reaches the inrush step duration limit; in response to the inrush step duration reaching the inrush step duration limit, monitoring load voltage; comparing a change in the monitored load voltage over time to a predetermined inrush voltage check level; and differentiating a charging load from a non-charging load when the change in the monitored load voltage over time indicates an increase in voltage.
Clause 2. The load inrush protection system of Clause 1, wherein the memory stores processor-executable instructions that, when executed, further configure the load inrush processor for monitoring load voltage status by: receiving, from the DC protection device, a close signal indicating the DC protection device closing the DC power distribution system before causing the power transistor of the DC protection device to close; storing a starting voltage low measurement before causing the power transistor of the DC protection device to close; in response to the inrush step duration reaching the inrush step duration limit, starting a voltage check delay timer; waiting until the voltage check delay timer exceeds a voltage check delay duration; receiving an updated low voltage measurement; and comparing the updated voltage measurement to the starting voltage low measurement to identify a load charge status.
Clause 3. The load inrush protection system of Clause 1 or Clause 2, wherein the memory stores processor-executable instructions that, when executed, further configure the load inrush processor for: re-starting, in response to the differentiating step indicating the charging load, the inrush step timer; and repeating the causing, detecting, setting, reclosing, and monitoring steps until the charging load is charged.
Clause 4. The load inrush protection system of any of Clauses 1 to 3, wherein the memory stores processor-executable instructions that, when executed, further configure the load inrush processor for: stopping, in response to the differentiating step indicating the non-charging load, the inrush step timer and asserting a short circuit trip.
Clause 5. The load inrush protection system of any of Clauses 1 to 4, wherein the DC protection device is selected from the group of a solid state protection device and a hybrid protection device.
Clause 6. The load inrush protection system of any of Clauses 1 to 5, wherein the memory stores processor-executable instructions that, when executed, further configure the load inrush processor for: receiving an input indicating the inrush step duration limit and setting the inrush step duration limit to the input, wherein the input indicates a time from one to one hundred milliseconds.
Clause 7. The load inrush protection system of any of Clauses 1 to 6, wherein the memory stores processor-executable instructions that, when executed, further configure the load inrush processor for: receiving, before causing the power transistor of the DC protection device to close the circuit, a short circuit threshold; and tripping, after causing the switch to close, the DC protection device in response to a current of the load exceeding the short circuit threshold.
Clause 8. The load inrush protection system of any of Clauses 1 to 7, wherein the memory stores processor-executable instructions that, when executed, further configure the load inrush processor for: starting, before causing the power transistor of the DC protection device to close the circuit, an inrush total timer; stopping the inrush step timer, stopping the inrush total timer, and asserting a short circuit trip in response to inrush total timer exceeding an inrush total duration limit during execution of any of the causing, detecting, setting, and reclosing steps.
Clause 9. A method for protecting a direct current (DC) distribution system from excessive load inrush, the DC distribution system configured to supply DC power to a load, the method comprising: storing an initial voltage measurement of the load; closing a solid state switch of a DC protection device to close a circuit for connecting the DC power to the load; detecting when the DC protection device trips in response to a short circuit, wherein the solid state switch opens when the DC protection device trips to open the circuit for interrupting the DC power to the load; reclosing the solid state switch and repeating the detecting and reclosing steps one or more times until an inrush step timer reaches an inrush step duration limit; determining, after the inrush step timer reaches the inrush step duration limit, a load charging status based on comparing the initial voltage measurement to an updated measurement of the voltage of the load; based on the determined load charging status, differentiating between charging of the load and non-charging of the load, wherein inrush current is limited during charging of the load.
Clause 10. The method of Clause 9, further comprising: in response to the determined load charging status indicating a successful charging of the load, setting a short circuit threshold to a nominal value and stopping the inrush step timer; in response to the determined load charging status indicating an unsuccessful charging of the load, setting the short circuit threshold to the nominal value and asserting a short circuit trip; and in response to the inrush step timer exceeding an inrush step duration limit prior to receiving the short circuit being asserted, setting the short circuit threshold to nominal and stopping the inrush total timer and the inrush step timer.
Clause 11. The method of Clause 9 or Clause 10, further comprising: in response to the determined load charging status indicating an in-process load charge, restarting the inrush step timer and repeating the detecting, reclosing, and setting steps until the determined load charging status indicates the successful charging of the load.
Clause 12. The method of any of Clauses 9 to 11, further comprising: in response to the inrush step timer exceeding the inrush step duration limit after detecting when the DC protection device trips, starting a reclose delay timer; waiting for the reclose delay timer to exceed an inrush re-close delay limit, before reclosing the solid state switch.
Clause 13. The method of any of Clauses 9 to 12, further comprising: receiving a short circuit threshold; and tripping, after causing the switch to close, the DC protection device in response to a current of the load exceeding the short circuit threshold.
Clause 14. The method of any of Clauses 9 to 13, further comprising: starting an inrush total duration timer before causing the switch to close; and in response to inrush total timer exceeding an inrush total duration limit, setting the short circuit threshold to a nominal value, stopping the inrush step timer, stopping the inrush total timer, and asserting a short circuit trip; in response to the load charging status indicating successful charging of the load, stopping the inrush total timer; and in response to the load charging status indicating unsuccessful charging of the load, stopping the inrush total timer.
Clause 15. A load inrush protection system, for managing load inrush for direct current (DC) protection in a power distribution system, the power distribution system supplying DC power to a load, the load comprising at least one electronic device, the load inrush protection system comprising: a DC protection device coupled to a DC power distribution system; a load inrush processor coupled to the DC protection device; a memory coupled to the load inrush processor, the memory storing processor-executable instructions that, when executed, configure the load inrush processor for: receiving a device current rating associated with the electronic device; setting a short circuit threshold to the device current rating; receiving a signal to close a circuit associated with the electronic device; starting an inrush step timer; causing a switch of the DC protection device to close the circuit for connecting the DC power to the load; detecting a current of the circuit; tripping, in response to a current of the circuit exceeding the short circuit threshold, the DC protection device, wherein the switch for interrupting the DC power to the load; reclosing the switch after a reclose delay time and repeating the detecting, tripping, and reclosing steps one or more times until the inrush step timer reaches the inrush step duration limit; in response to the inrush step duration reaching the inrush step duration limit, monitoring load voltage; comparing a change in the monitored load voltage over time to a predetermined inrush voltage check level; and differentiating between a charging load from a non-charging load when the change in the monitored load voltage over time indicates an increase in voltage.
Clause 16. The system of Clause 15, wherein the DC protection device is selected from the group of a solid state protection device and a hybrid protection device.
Clause 17. The system of Clause 15 or Clause 16, wherein the memory stores processor-executable instructions that, when executed, further configure the load inrush processor for: receiving an updated device current rating associated with the electronic device; and setting the short circuit threshold to the updated device current rating.
Clause 18. The system of any of Clauses 15 to 17, wherein the memory stores processor-executable instructions that, when executed, further configure the load inrush processor for: starting an inrush total duration timer before causing the switch to close; and in response to inrush total timer exceeding an inrush total duration limit, setting the short circuit threshold to a nominal value, stopping the inrush step timer, stopping the inrush total timer, and asserting a short circuit trip; in response to the load charging status indicating successful charging of the load, stopping the inrush total timer; and in response to the load charging status indicating unsuccessful charging of the load, stopping the inrush total timer.
Clause 19. The load inrush protection system of any of Clauses 15 to 18, wherein the memory stores processor-executable instructions that, when executed, further configure the load inrush processor for: setting, in response to the differentiating step indicating the non-charging load, the stopping the inrush step timer and asserting a short circuit trip.
Clause 20. The load inrush protection system of any of Clauses 15 to 19, wherein the memory stores processor-executable instructions that, when executed, further configure the load inrush processor for: re-starting, in response to the differentiating step indicating the charging load, the inrush step timer; and repeating the causing, detecting, tripping, reclosing, and monitoring steps until the charging load is charged, wherein the charging load is identified as charged load when the change in the monitored load voltage over time exceeds the inrush voltage check level.

## Claims

1. A load inrush protection system for managing load inrush for direct current, DC, protection in a power distribution system (100) configured to supply DC power to a load (106), the load inrush protection system comprising:
a DC protection device (102) for coupling to the power distribution system (100), the DC protection device (102) comprising a power transistor (105) configured to selectively close a circuit for connecting the DC power to the load (106);
a load inrush processor (108) coupled to the DC protection device (102); and
a memory (110) coupled to the load inrush processor (108), the memory (110) storing processor-executable instructions that, when executed, configure the load inrush processor (108) for:
causing the power transistor (105) of the DC protection device (102) to close the circuit for connecting the DC power to the load (106);
detecting when the DC protection device (102) trips in response to a short circuit, wherein the power transistor (105) opens when the DC protection device (102) trips to open the circuit for interrupting the DC power to the load (106);
setting an inrush step timer when the DC protection device (102) trips and in response to the inrush step timer not exceeding an inrush step duration limit;
causing the power transistor (105) to reclose after a reclose delay time and repeating the detecting, setting, and reclosing steps one or more times until the inrush step timer reaches the inrush step duration limit;
in response to the inrush step duration reaching the inrush step duration limit, monitoring load voltage;
comparing a change in the monitored load voltage over time to a predetermined inrush voltage check level; and
differentiating a charging load from a non-charging load when the change in the monitored load voltage over time indicates an increase in voltage.

2. The load inrush protection system of claim 1, wherein the memory (110) stores processor-executable instructions that, when executed, configure the load inrush processor (108) for monitoring load voltage status by:
receiving, from the DC protection device (102), a close signal indicating the DC protection device (102) closing the DC power distribution system (100) before causing the power transistor (105) of the DC protection device (102) to close;
storing a starting voltage low measurement before causing the power transistor (105) of the DC protection device (102) to close;
in response to the inrush step duration reaching the inrush step duration limit, starting a voltage check delay timer;
waiting until the voltage check delay timer exceeds a voltage check delay duration;
receiving an updated low voltage measurement; and
comparing the updated voltage measurement to the starting voltage low measurement to identify a load charge status.

3. The load inrush protection system of claim 1 or claim 2, wherein the memory (110) stores processor-executable instructions that, when executed, configure the load inrush processor (108) for:
re-starting, in response to the differentiating step indicating the charging load, the inrush step timer; and
repeating the causing, detecting, setting, reclosing, and monitoring steps until the charging load is charged.

4. The load inrush protection system of any of claims 1 to 3, wherein the memory (110) stores processor-executable instructions that, when executed, configure the load inrush processor (108) for:
stopping, in response to the differentiating step indicating the non-charging load, the inrush step timer and asserting a short circuit trip.

5. The load inrush protection system of any of claims 1 to 4, wherein the DC protection device (102) is selected from the group of a solid state protection device and a hybrid protection device.

6. The load inrush protection system of any of claims 1 to 5, wherein the memory (110) stores processor-executable instructions that, when executed, configure the load inrush processor (108) for:
receiving an input indicating the inrush step duration limit and setting the inrush step duration limit to the input, wherein the input indicates a time from one to one hundred milliseconds.

7. The load inrush protection system of any of claims 1 to 6, wherein the memory (110) stores processor-executable instructions that, when executed, configure the load inrush processor (108) for:
receiving, before causing the power transistor (105) of the DC protection device (102) to close the circuit, a short circuit threshold; and
tripping, after causing the switch to close, the DC protection device (102) in response to a current of the load exceeding the short circuit threshold.

8. The load inrush protection system of any of claims 1 to 7, wherein the memory (110) stores processor-executable instructions that, when executed, configure the load inrush processor (108) for:
starting, before causing the power transistor (105) of the DC protection device (102) to close the circuit, an inrush total timer; and
stopping the inrush step timer, stopping the inrush total timer, and asserting a short circuit trip in response to inrush total timer exceeding an inrush total duration limit during execution of any of the causing, detecting, setting, and reclosing steps.

9. A method for protecting a direct current, DC, distribution system from excessive load inrush, the DC distribution system configured to supply DC power to a load (106), the method comprising:
storing an initial voltage measurement of the load (106);
closing a solid state switch of a DC protection device (102) to close a circuit for connecting the DC power to the load (106);
detecting when the DC protection device (102) trips in response to a short circuit, wherein the solid state switch opens when the DC protection device (102) trips to open the circuit for interrupting the DC power to the load (106);
reclosing the solid state switch and repeating the detecting and reclosing steps one or more times until an inrush step timer reaches an inrush step duration limit;
determining, after the inrush step timer reaches the inrush step duration limit, a load charging status based on comparing the initial voltage measurement to an updated measurement of the voltage of the load (106); and
based on the determined load charging status, differentiating between charging of the load and non-charging of the load (106), wherein inrush current is limited during charging of the load (106).

10. The method of claim 9, comprising:
in response to the determined load charging status indicating a successful charging of the load (106), setting a short circuit threshold to a nominal value and stopping the inrush step timer;
in response to the determined load charging status indicating an unsuccessful charging of the load (106), setting the short circuit threshold to the nominal value and asserting a short circuit trip; and
in response to the inrush step timer exceeding an inrush step duration limit prior to receiving the short circuit being asserted, setting the short circuit threshold to nominal and stopping the inrush total timer and the inrush step timer.

11. The method of claim 9 or claim 10, comprising:
in response to the determined load charging status indicating an in-process load charge, restarting the inrush step timer and repeating the detecting, reclosing, and setting steps until the determined load charging status indicates the successful charging of the load (106).

12. The method of any of claims 9 to 11, comprising at least one of:
in response to the inrush step timer exceeding the inrush step duration limit after detecting when the DC protection device (102) trips, starting a reclose delay timer; and waiting for the reclose delay timer to exceed an inrush re-close delay limit, before reclosing the solid state switch; or
receiving a short circuit threshold; and tripping, after causing the switch to close, the DC protection device (102) in response to a current of the load exceeding the short circuit threshold; or
starting an inrush total duration timer before causing the switch to close; and in response to inrush total timer exceeding an inrush total duration limit, setting the short circuit threshold to a nominal value, stopping the inrush step timer, stopping the inrush total timer, and asserting a short circuit trip; in response to the load charging status indicating successful charging of the load (106), stopping the inrush total timer; and in response to the load charging status indicating unsuccessful charging of the load (106), stopping the inrush total timer.

13. A load inrush protection system for managing load inrush for direct current, DC, protection in a power distribution system (100) for supplying DC power to a load (106) comprising at least one electronic device, the load inrush protection system comprising:
a DC protection device (102) for coupling to a DC power distribution system (100);
a load inrush processor (108) coupled to the DC protection device (102);
a memory (110) coupled to the load inrush processor (108), the memory (110) storing processor-executable instructions that, when executed, configure the load inrush processor (108) for:
receiving a device current rating associated with the electronic device;
setting a short circuit threshold to the device current rating;
receiving a signal to close a circuit associated with the electronic device;
starting an inrush step timer;
causing a switch of the DC protection device (102) to close the circuit for connecting the DC power to the load (106);
detecting a current of the circuit;
tripping, in response to a current of the circuit exceeding the short circuit threshold, the DC protection device (102), wherein the switch for interrupting the DC power to the load (106);
reclosing the switch after a reclose delay time and repeating the detecting, tripping, and reclosing steps one or more times until the inrush step timer reaches the inrush step duration limit;
in response to the inrush step duration reaching the inrush step duration limit, monitoring load voltage;
comparing a change in the monitored load voltage over time to a predetermined inrush voltage check level; and
differentiating between a charging load from a non-charging load when the change in the monitored load voltage over time indicates an increase in voltage.

14. The system of claim 13, wherein the memory (110) stores processor-executable instructions that, when executed, configure the load inrush processor (108) for:
receiving an updated device current rating associated with the electronic device; and
setting the short circuit threshold to the updated device current rating.

15. The system of claim 13 or claim 14, wherein the memory (110) stores processor-executable instructions that, when executed, configure the load inrush processor (108) for at least one of:
starting an inrush total duration timer before causing the switch to close, and in response to inrush total timer exceeding an inrush total duration limit, setting the short circuit threshold to a nominal value, stopping the inrush step timer, stopping the inrush total timer, and asserting a short circuit trip; or
in response to the load charging status indicating successful charging of the load (106), stopping the inrush total timer, and in response to the load charging status indicating unsuccessful charging of the load (106), stopping the inrush total timer; or
setting, in response to the differentiating step indicating the non-charging load, the stopping the inrush step timer and asserting a short circuit trip.
